# EUROPÄISCHE PATENTSCHRIFT

(11) **EP 0 639 126 B1**
(45) Veröffentlichungstag und Bekanntmachung des Hinweises auf die Patenterteilung: **18.06.1997**
(21) Anmeldenummer: 94908976.7
(22) Anmeldetag: 14.03.1994
(51) Int. Cl.: B60P 7/08, B64D 9/00, A44B 11/25

(54) **VERLÄNGERUNGSBESCHLAG EINES SPANNGURTS**
MOUNTING FOR LENGTHENING CLAMPING STRAPS
FERRURE DE RALLONGE DE SANGLE DE SERRAGE

(30) Priorität: 12.03.1993 DE 9303666 U
(43) Veröffentlichungstag der Anmeldung: 22.02.1995
(73) Patentinhaber: RIBECO GMBH, D-69190 Walldorf (DE)
(72) Erfinder: BERREZOUGA, Ridha, D-69190 Walldorf (DE)
(74) Vertreter: Meyer-Roedern, Giso, Dr.
(86) Internationale Anmeldenummer: DE9400275
(87) Internationale Veröffentlichungsnummer: WO9420329

(56) Entgegenhaltungen:
- DE-A- 2 839 305
- GB-A- 787 750
- US-A- 2 743 684
- US-A- 3 605 637

## Beschreibung

Die Erfindung betrifft einen Verlängerungsbeschlag eines Spanngurts, an dem ein Gurtanker angebracht ist, der lösbar mit dem Halteprofil eines Gegenstücks in Eingriff bringbar ist, mit einer Öse für den Spanngurt an dem Gurtanker und mit einer der Öse für den Spanngurt gegenüberliegenden Öse für einen Verlängerungsgurt an dem Verlängerungsbeschlag.

Spanngurte kommen zum Einsatz, um Luftfrachtgut in einem Flugzeug festzuspannen. Frachtflugzeuge haben an tragenden Teilen des Flugzeugrumpfs Halteprofile für die Aufnahme der Gurtanker. Ebenso haben die zum Einsatz kommenden Frachtpaletten ringsum Halteprofil-Schinen für die Aufnahme der Gurtanker. Einschlägige Gurtanker und Halteprofile sind der GB-A-0 787 750, US-A-2 743 684 und US-A-3 605 637 zu entnehmen.

Die Gurte haben Standardlängen, die für bestimmte Anwendungen zu kurz sein können. Für eine Verlängerung einschlägiger Gurte gibt es nach dem Stand der Technik nur Behelfslösungen, die die hohen Sicherheitsanforderungen nicht befriedigend erfüllen. Mit den Behelfslösungen geht die Gefahr von Transportschäden einher.

Aus der DE-A-28 39 305 ist ein aus zwei Gurtbändern bestehendes, X-förmiges Spanngurtpaar bekannt. An den Enden der Gurtbänder befinden sich Befestigungsbänder, die eine Verlängerung der Gurtbänder darstellen. In Spezialhaltern zur Anbringung der Befestigungsbänder an den Gurtbändern sind Verlängerungsbeschläge zu sehen, die eine Öse für die Befestigungsbänder haben. Die Gurtbänder sind mittels eines Schnellverschlusses verbunden, dessen Teile als ein Gurtanker und ein Halteprofil dafür betrachtet werden können. Der Gurtanker hat eine Öse für das Gurtband, der die Ösen für die Befestigungsbänder daran in nicht näher definierter Geometrie gegenüberliegen. Somit ist ein Verlängerungsbeschlag der eingangs genannten Art aus der DE-A-28 39 305 bekannt.

Aufgabe der Erfindung ist es, einen derartigen Verlängerungsbeschlag zu schaffen, der eine sichere Spanngurtverlängerung insbesondere für den Luftfrachteinsatz ermöglicht.

Der diese Aufgabe lösende Verlängerungsbeschlag weist eine Platte mit zwei seitlich daran ansetzenden, aufeinander zu gerichteten Klauen auf, die das Halteprofil bilden. Der Gurtanker hat einen Fuß mit wenigstens einem davon abstehenden Ankerpilz, dessen Kopf zwischen die Klauen paßt. Die Öse für den Verlängerungsgurt ist auf der den Klauen abgewandten Seite der Platte derart angeordnet, daß sie der Öse für den Spanngurt eines mit den Klauen in Eingriff stehenden Gurtankers gegenüberliegt.

Dank der einander gegenüberliegenden Anordnung der Ösen sind die an den Gurten wirkenden Zugkräfte quer zu der Profillängsrichtung des Halteprofils gerichtet. Es gibt keine in Profillängsrichtung des Halteprofils wirkende Kraftkomponente, die den Gurtanker aus dem Halteprofil herausziehen könnte.

Die Platte des Verlängerungsbeschlags ist vorzugsweise im wesentlichen rechteckig.

Die das Halteprofil bildenden Klauen können im wesentlichen ein C-Profil haben. Der Fuß des Gurtankers paßt zwischen die Klauen und der Kopf des Ankerpilzes in deren C-Profilöffnung.

Vorzugsweise sind die Klauen mit wenigstens einer Ausnehmung und/oder Erweiterung zum Einführen des Ankerpilzes versehen.

Der Gurtanker kann einpilzig sein. Die Klauen des Verlängerungsbeschlags haben dann vorzugsweise in Profillängsrichtung beidseitige Erweiterungen, durch die der Kopf des Ankerpilzes in das Halteprofil eingeführt werden kann.

Der Gurtanker kann aber auch zweipilzig sein. Vorzugsweise sind die Klauen dann mit zwei in Profillängsrichtung versetzten Ausnehmungen versehen, durch die sich die Köpfe der beiden Ankerpilze in das Halteprofil einführen lassen.

Schließlich kann der Gurtanker auch dreipilzig sein. Die Klauen sind dann vorzugsweise mit drei in Profillängsrichtung versetzten Ausnehmungen versehen, durch die sich die Köpfe der drei Ankerpilze in das Halteprofil einführen lassen.

Die Ankerpilze und ein Riegel des Gurtankers können kreisrund sein. Die Ausnehmungen der Klauen sind bevorzugt paarweise einander gegenüberliegende Kreissegmente, deren Peripherie auf einem gemeinsamen Kreis liegt.

Die Erfindung wird im folgenden anhand von in den Zeichnungen dargestellten Ausführungsbeispielen näher erläutert. Es zeigen:
- Fig. 1: die perspektivische Ansicht eines zweipilzigen Gurtankers und eines damit zusammenwirkenden Verlängerungsbeschlags;
- Fig. 2: eine Seitenansicht des zweipilzigen Gurtankers;
- Fig. 3: einen Schnitt durch den zweipilzigen Gurtanker nach III - III von Fig. 2;
- Fig. 4: eine Seitenansicht des mit dem zweipilzigen Gurtanker zusammenwirkenden Verlängerungsbeschlags;
- Fig. 5: eine Vorderansicht des Verlängerungsbeschlags mit Blick in Richtung V von Fig. 4;
- Fig. 6: eine Draufsicht auf den Verlängerungsbeschlag mit Blick in Richtung VI von Fig. 4;
- Fig. 7: die Vorderansicht eines einpilzigen Gurtankers;
- Fig. 8: eine Seitenansicht des einpilzigen Gurtankers mit Blick in Richtung VIII von Fig. 7;
- Fig. 9: die Vorderansicht eines mit dem einpilzigen Gurtanker zusammenwirkenden Verlängerungsbeschlags;
- Fig. 10: eine Seitenansicht des Verlängerungsbeschlags mit Blick in Richtung X von Fig. 9;
- Fig. 11: eine Draufsicht auf den Verlängerungsbeschlag mit Blick in Richtung XI von Fig. 9;
- Fig. 12: die Seitenansicht eines dreipilzigen Gurtankers;
- Fig. 13: einen Schnitt durch den dreipilzigen Gurtanker nach XIII - XIII von Fig. 12;
- Fig. 14: die Seitenansicht eines mit dem dreipilzigen Gurtanker zusammenwirkenden Verlängerungsbeschlags;
- Fig. 15: eine Vorderansicht des Verlängerungsbeschlags mit Blick in Richtung XV von Fig. 14; und
- Fig. 16: eine Draufsicht auf den Verlängerungsbeschlag mit Blick in Richtung XVI von Fig. 14.

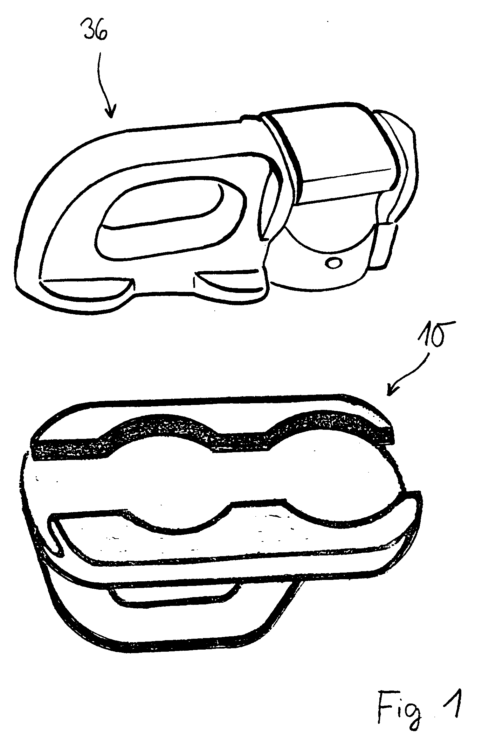

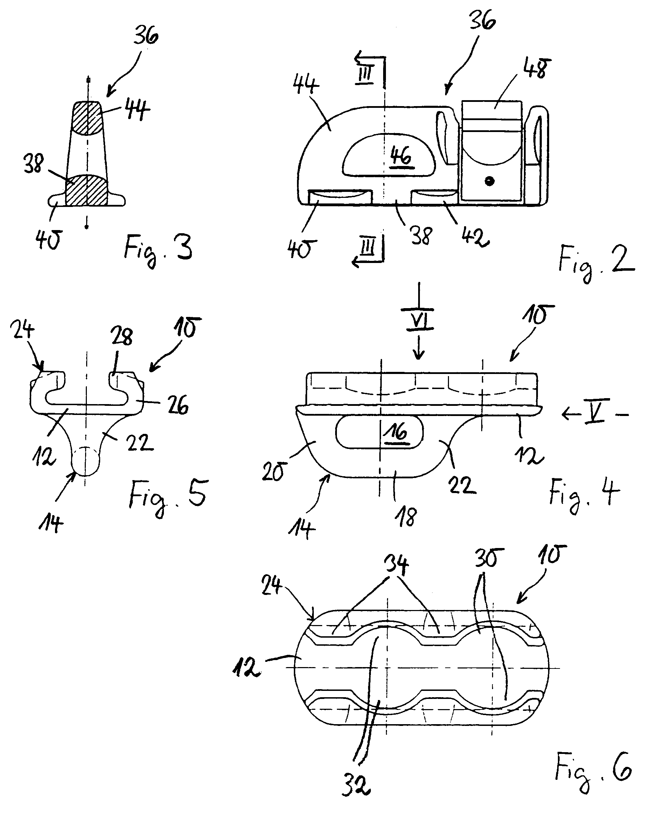

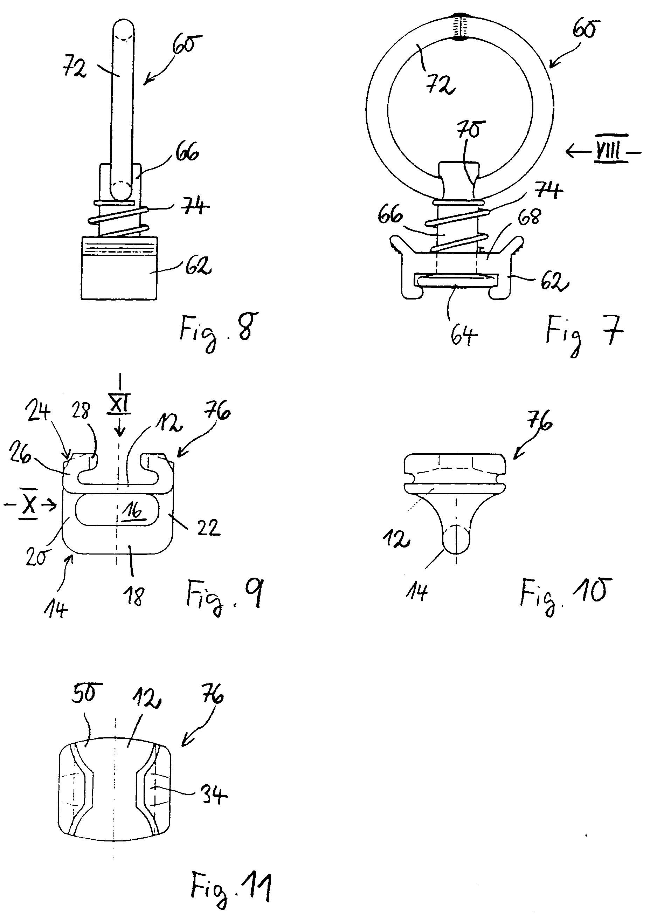

Der in Fig. 1 und Fig. 4 bis Fig. 6 dargestellte Verlängerungsbeschlag 10 besteht aus einer länglich-rechteckigen Platte 12, die an den Enden oval gerundet ist. An der Unterseite der Platte 12 ist in deren Längsmittelebene ein Bügel 14 angeordnet, der zusammen mit der Platte 12 eine Öse 16 für die Befestigung eines Gurts bildet. Der Bügel 14 hat die Grundform eines Trapezes. Sein aus Rundmaterial bestehender Bügelrücken 18 erstreckt sich im wesentlichen parallel zu der Platte 12. Die Bügelschenkel 20, 22 sind beidseits in Längsrichtung geneigt und in Längs- und Querrichtung nach Art einer abgerundeten Pyramide verbreitert. Ein Bügelschenkel 20 setzt an der einen Querseite der Platte 12, und der andere Bügelschenkel 22 etwa in Plattenmitte an.

An der Oberseite der Platte 12 ist ein Halteprofil ausgebildet, das aus zwei entlang der Längsseiten der Platte 12 über deren Länge sich erstreckenden Klauen 24 besteht. Die Klauen 24 haben ein C-Profil, dessen C-Rücken 26 sich an der Plattenlängsseite senkrecht zu der Plattenebene nach oben erstreckt und in einen C-Schenkel 28 übergeht, der oberhalb der Plattenebene nach innen ragt, so daß die C-Schenkel 28 aufeinander zu gerichtet sind. Zwischen den C-Schenkeln 28 verbleibt eine Lücke. Insgesamt hat das Halteprofil eine sich in Plattenlängsrichtung erstreckende T-Profilöffnung.

Die C-Schenkel 28 der Klauen 24 sind mit je zwei in Plattenlängsrichtung versetzten Ausnehmungen 30, 32 versehen, die die Form von Kreissegmenten haben. Die Ausnehmungen 30, 32 liegen einander paarweise gegenüber. Die äußere Peripherie eines jeden Paares von Ausnehmungen 30, 32 liegt auf einem gemeinsamen Kreis um eine Achse senkrecht zu der Plattenebene. Ein hinteres Paar Ausnehmungen 30 befindet sich nahe der Querseite der Platte 12, die dem Ansatz des Bügels 14 gegenüberliegt. Das vordere Paar Ausnehmungen 32 ist von der anderen Querseite weiter beabstandet auf etwa zwei Drittel Plattenlänge angeordnet. Vor dem vorderen Paar Ausnehmungen 32 sowie zwischen den Paaren Ausnehmungen 30, 32 bilden die C-Schenkel 28 der Klauen 24 Haltestege 34.

In dem Halteprofil kommt der in Fig. 1 bis Fig. 3 dargestellte Gurtanker 36 zum Eingriff. Der Gurtanker 36 hat einen zwischen die Klauen 24 des Halteprofils passenden Fuß 38. Im unteren Bereich des Fußes 38 setzen beidseits nach außen abstehende Nasen 40, 42 an, die die Form von Kreissegmenten haben. Es sind zwei in Längsrichtung versetzte Paare einander gegenüberliegender Nasen 40, 42 vorgesehen, deren Peripherie auf einem gemeinsamen Kreis liegt. Je ein Paar Nasen 40, 42 bildet einen Ankerpilz des zweipilzigen Gurtankers 36.

Das Halteprofil des Verlängerungsbeschlags 10 ist so dimensioniert, daß die Ankerpilze mit Spiel in die Ausnehmungen 30, 32 der Klauen 24 sowie in deren C-Profilöffnungen, d. h. unter die Haltestege 34 passen.

Von dem Fuß 38 des Gurtankers 36 geht nach oben ein Bügel 44 ab, der mit dem Fuß 38 eine Öse 46 zur Anbringung eines Gurts bildet. Hinter dem Bügel 44 ist eine Führung für einen Riegel 48 an den Fuß 38 angeformt. Der Riegel 48 ist rund, höhenverstellbar an dem Fuß 38 geführt und durch eine Feder niedergespannt.

Zur Gurtverlängerung wird der Gurtanker 36 mit seinen Ankerpilzen in die Halteprofilausnehmungen 30, 32 des Verlängerungsbeschlags 10 eingesetzt. In einer anfänglichen Schrägstellung stützt sich der Riegel 48 an der Oberseite des Halteprofils ab. Durch Niederdrücken und Vorschieben des Gurtankers 36 wird der Riegel 48 entgegen der Kraft der Feder angehoben, bis er in dem hinteren Paar Ausnehmungen 30 einrastet. In der Raststellung befinden sich die Ankerpilze unterhalb der Haltestege 34 der Klauen 24. Die Ösen 16, 46 von Gurtanker 36 und Verlängerungsbeschlag 10 liegen einander gegenüber.

Fig. 7 und Fig. 8 zeigen einen einpilzigen Gurtanker 60 mit einem T-profilfömigen Führungsstück 62, in dessen Profilöffnung ein kreisrunder Ankerpilz 64 aufgenommen ist. Der Ankerpilz 64 sitzt an einem zylindrischen Schaft 66, der durch eine Führungsbohrung in den Profilrücken 68 des Führungsstücks 62 hindurchragt. Das äußere Ende des Schafts ist aufgebohrt und in die Bohrung 70 eine ringförmige Öse 72 eingelassen. Eine um den Schaft 66 herumliegende Schraubendruckfeder 74, die sich einends an der Profilrückenaußenseite des Führungsstücks 62 und andernends an der Öse 72 abstützt, spannt den Ankerpilz 64 in eine Anlagestellung an der Profilrückeninnenseite des Führungsstücks 62 vor.

Fig. 9 bis Fig. 11 zeigen einen Verlängerungsbeschlag 76 für den einpilzigen Gurtanker 60. Der Verlängerungsbeschlag 76 ist erheblich kürzer als der zuvor beschriebene Verlängerungsbeschlag 10. Der Grundriß seiner Platte 12 ist annähernd quadratisch. Das Halteprofil des Verlängerungsbeschlags 76 weist mittige Haltestege 34 und beidseitige Erweiterungen 50 auf, durch die sich der Ankerpilz 64 des Gurtankers in die Haltestellung einführen läßt. Der Verlängerungsbeschlag 76 paßt in die T-Profilöffnung des einpilzigen Gurtankers 60. Im übrigen gilt die vorstehende Beschreibung entsprechend.

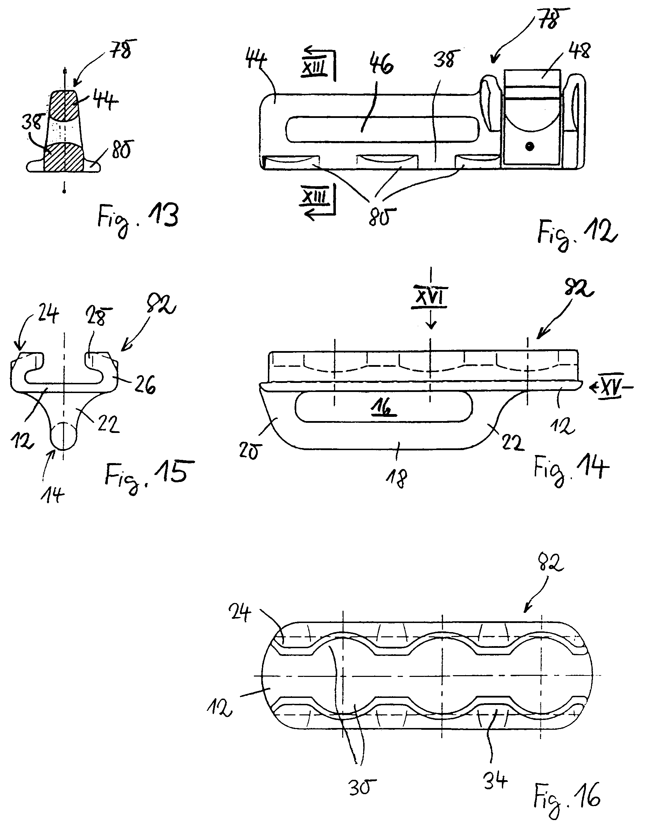

Fig. 12 und Fig. 13 zeigen einen dreipilzigen Gurtanker 78, der gegenüber dem zweipilzigen Gurtanker 36 verlängert und mit drei statt zwei Ankerpilzen 80 versehen, sonst aber mit dem zweipilzigen Gurtanker 36 im wesentlichen baugleich ist.

Fig. 14 bis Fig. 16 zeigen einen Verlängerungsbeschlag 82 für den dreipilzigen Gurtanker 78. Der Verlängerungsbeschlag 82 ist gegenüber dem Verlängerungsbeschlag 10 für den zweipilzigen Gurtanker 36 verlängert. Sein Halteprofil hat drei Paare von Ausnehmungen 52, 54, 56 für die drei Ankerpilze 80 des Gurtankers 78. Im übrigen gilt die vorstehende Beschreibung entsprechend.

### Liste der Bezugszeichen

- 10: Verlängerungsbeschlag
- 12: Platte
- 14: Bügel
- 16: Öse
- 18: Bügelrücken
- 20: Bügelschenkel
- 22: Bügelschenkel
- 24: Klaue
- 26: C-Rücken
- 28: C-Schenkel
- 30: Ausnehmung
- 32: Ausnehmung
- 34: Haltesteg
- 36: zweipilziger Gurtanker
- 38: Fuß
- 40: Nase
- 42: Nase
- 44: Bügel
- 46: Öse
- 48: Riegel
- 50: Erweiterung
- 52: Ausnehmung
- 54: Ausnehmung
- 56: Ausnehmung
- 60: einpilziger Gurtanker
- 62: Führungsstück
- 64: Ankerpilz
- 66: Schaft
- 68: Profilrücken
- 70: Bohrung
- 72: Öse
- 74: Schraubendruckfeder
- 76: Verlängerungsbeschlag
- 78: dreipilziger Gurtanker
- 80: Ankerpilz
- 82: Verlängerungsbeschlag

## Patentansprüche

1. Verlängerungsbeschlag (10, 76, 82) eines Spanngurts, an dem ein Gurtanker (36, 60, 78) angebracht ist, der lösbar mit dem Halteprofil eines Gegenstücks in Eingriff bringbar ist, mit einer Öse (56, 72) für den Spanngurt an dem Gurtanker (36, 60, 78) und mit einer der Öse (56, 72) für den Spanngurt gegenüberliegenden Öse (16) für einen Verlängerungsgurt an dem Verlängerungsbeschlag (10, 76, 82) dadurch gekennzeichnet, daß der Verlängerungsbeschlag (10, 76, 82) eine Platte (12) mit zwei seitlich daran ansetzenden, aufeinander zu gerichteten Klauen (24) aufweist, die das Halteprofil bilden, daß der Gurtanker (36, 60, 78) einen Fuß (38) mit wenigstens einem davon abstehenden Ankerpilz (40, 42; 64; 80) hat, dessen Kopf zwischen die Klauen (24) paßt, und daß die Öse (16) für den Verlängerungsgurt auf der den Klauen (24) abgewandten Seite der Platte (12) derart angeordnet ist, daß sie der Öse (46, 72) für den Spanngurt eines mit den Klauen (24) in Eingriff stehenden Gurtankers (36, 60, 78) gegenüberliegt.

2. Verlängerungsbeschlag (10, 76, 82) nach Anspruch 1, dadurch gekenzeichnet, daß die Platte (12) im wesentlichen rechteckig ist.

3. Verlängerungsbeschlag (10, 76, 82) nach Anspruch 1 oder 2, dadurch gekennzeichnet, daß die Klauen (24) im wesentlichen ein C-Profil haben.

4. Verlängerungsbeschlag (10, 76, 82) nach Anspruch 3, dadurch gekennzeichnet, daß der Fuß (38) des Gurtankers (36, 60, 78) zwischen die Klauen (24) und der Kopf des Ankerpilzes (40, 42; 64; 80) in deren C-Profilöffnung paßt.

5. Verlängerungsbeschlag (10, 76, 82) nach einem der Ansprüche 1 bis 4, dadurch gekennzeichnet, daß die Klauen (24) mit wenigstens einer Ausnehmung (30, 32, 52, 54, 56) und/oder Erweiterung (50) zum Einführen des Ankerpilzes (40, 42; 64; 80) versehen sind.

6. Verlängerungsbeschlag nach einem der Ansprüche 1 bis 5, dadurch gekennzeichnet, daß der Gurtanker (60) einpilzig ist, und daß die Klauen (24) in Profillängsrichtung beidseitige Erweiterungen (50) haben.

7. Verlängerungsbeschlag nach einem der Ansprüche 1 bis 5, dadurch gekennzeichnet, daß der Gurtanker (36) zweipilzig ist, und daß die Klauen (24) mit zwei in Profillängsrichtung versetzten Ausnehmungen (52, 54) zum Einführen der beiden Ankerpilze (40, 42) versehen sind.

8. Verlängerungsbeschlag nach einem der Ansprüche 1 bis 5, dadurch gekennzeichnet, daß der Gurtanker (78) dreipilzig ist, und daß die Klauen (24) mit drei in Profillängsrichtung versetzten Ausnehmungen (52, 54, 56) zum Einführen der drei Ankerpilze (80) versehen sind.

9. Verlängerungsbeschlag nach einem der Ansprüche 1 bis 8, dadurch gekennzeichnet, daß die Ausnehmungen (30, 32, 52, 54, 56) paarweise einander gegenüberliegende Kreissegmente sind, deren Peripherie auf einem gemeinsamen Kreis liegt.

## Claims

1. Extension fitting (10, 76, 82) of a strapping belt with a belt anchor (36, 60, 78) mounted thereon which loosably engages with the holding profile of an opposite part, with an eyelet (56, 72) for the strapping belt on the belt anchor (36, 60, 78), and with an eyelet (16) for an extension belt on the extension fitting (10, 76, 82) opposite to the eyelet (56, 72) for the strapping belt, characterized in that the extension fitting (10, 76, 82) comprises a plate (12) with two claws (24) fixed laterally thereon and directed towards one another which form the holding pofile, that the belt anchor (36, 60, 78) comprises a foot (38) with at least one anchor mushroom (40, 42; 64; 80) extending therefrom having a head which fits between the claws (24), and that the eyelet (16) for the extension belt is disposed to the side of the plate turned away from the claws (24) in such a manner that it will be opposite to the eyelet (46, 72) for the strapping belt when the belt anchor (36, 60, 78) engages with the claws (24).

2. Extension fitting (10, 76, 82) according to claim 1, characterized in that the plate (12) is substantially ractangular.

3. Extension fitting (10, 76, 82) according to claim 1 or 2, characterized in that the claws (24) essentially comprise a C-profile.

4. Extension fitting (10, 76, 82) according to claim 3, characterized in that the foot (38) of the belt anchor (36, 60, 78) fits between the claws (24), and that the head of the anchor mushroom (40, 42; 64; 80) fits into the opening of the C-profile of the claws (24).

5. Extension fitting according to one of the claims 1 to 4, characterized in that the claws (24) are provided with at least one recess (30, 32, 52, 54, 56) and/or widening (50) for introducing the anchor mushroom (40, 42; 64; 80).

6. Extension fitting according to one of the claims 1 to 5, characterized in that the belt anchor (60) has a single mushroom (64), and that the claws (24) have widenings (50) arranged in the longitudinal direction of the profile on both sides.

7. Extension fitting according to one of the claims 1 to 5, characterized in that the belt anchor has two mushrooms (40, 42), and that the claws (24) are provided with two recesses (52, 54) spaced apart in the longitudinal direction of the profile for introducing the two anchor mushrooms (40, 42).

8. Extension fitting according to one of the claims 1 to 5, characterized in that the belt anchor (78) has three mushrooms (80), and that the claws (24) are provided with three recesses (52, 54, 56) spaced apart in the longitudinal direction of the profile for introducing the three anchor mushrooms (80).

9. Extension fitting according one of the claims 1 to 8, characterized in that the recesses (30, 32, 52, 54, 56) each comprise a pair of circular segments lying opposite one another, the periphery of each pair of which lying on a common circle.

## Revendications

1. Ferrure de rallonge (10, 76, 82) d'une sangle d' arrimage, sur laquelle est fixée une fixation de sangle (36, 60, 78) qui peut être mise en prise de façon amovible avec le profil d'arrêt d'une pièce complémentaire comportant un oeillet (56, 72) pour la sangle d'arrimage sur la fixation de sangle (36, 60, 78) et un oeillet (16) pour une sangle de rallonge sur la ferrure de rallonge, lequel oeillet (16) est placé à l'opposé de l'oeillet (56, 72) pour la sangle d'arrimage (10, 76, 82), caractérisée en ce que la ferrure de rallonge (10, 76, 82) présente une plaque (12) sur laquelle viennent se fixer latéralement deux griffes (24) tournées l'une vers l'autre et qui forment le profil d'arrêt, en ce que la fixation de sangle (36, 60, 78) a un pied (38) avec au moins un champignon de fixation (40, 42, 64, 80) à distance de celui-ci et dont la tête s'adapte entre les griffes (24), et en ce que l'oeillet (16) pour la sangle de rallonge est disposé sur le côté de la plaque (12) opposé aux griffes (24) de façon qu'il est opposé à l'oeillet (46, 72) pour la sangle d'arrimage d'une fixation de sangle (36, 60, 78) qui est en prise avec les griffes (24).

2. Ferrure de rallonge (10, 76, 82) selon la revendication 1, caractérisée en ce que la plaque (12) est sensiblement rectangulaire.

3. Ferrure de rallonge (10, 76, 82) selon l'une des revendications 1 ou 2, caractérisée en ce que les griffes (24) ont un profil sensiblement en forme de C.

4. Ferrure de rallonge (10, 76, 82) selon la revendication 3, caractérisée en ce que le pied (38) de la fixation de sangle (36, 60, 78) s'adapte entre les griffes (24) et la tête du champignon de fixation (40, 42, 64, 80) dans l'ouverture de leur profil en C.

5. Ferrure de rallonge (10, 76, 82) selon l'une des revendications 1 à 4, caractérisée en ce que les griffes (24) sont munies d'au moins un évidement (30, 32, 52, 54, 56) et/ou un élargissement (50) pour l'introduction du champignon de fixation (40, 42, 64, 80).

6. Ferrure de rallonge selon l'une des revendications 1 à 5, caractérisée en ce que la fixation de sangle (60) ne possède qu'un champignon et que les griffes (24) ont des élargissements (50) des deux côtés dans le sens longitudinal du profil.

7. Ferrure de rallonge selon l'une des revendications 1 à 5, caractérisée en ce que la fixation de sangle (36) a deux champignons et en ce que les griffes (24) sont munies de deux évidements (52, 54) décalés dans le sens longitudinal du profil pour l'introduction des deux champignons de fixation (40, 42).

8. Ferrure de rallonge selon l'une des revendications 1 à 5, caractérisée en ce que la fixation de sangle (78) a trois champignons et que les griffes (24) sont munies de trois évidements (52, 54, 56) décalés dans le sens longitudinal du profil pour l'introduction de trois champignons de fixation (80).

9. Ferrure de rallonge selon l'une des revendications 1 à 8, caractérisée en ce que les évidements (30, 32, 52, 54, 56) sont des segments de cercle jumelés opposés dont la périphérie repose sur un cercle commun.
